(19) Europäisches Patentamt
European Patent Office
Office européen des brevets

(11) **EP 1 752 286 B1**

(12) **EUROPEAN PATENT SPECIFICATION**

(45) Date of publication and mention
of the grant of the patent:
**21.03.2012 Bulletin 2012/12**

(51) Int Cl.:
**B32B 27/34** *(2006.01)*  **B29C 49/22** *(2006.01)*
**B65D 1/09** *(2006.01)*  **B65D 65/40** *(2006.01)*

(21) Application number: **05751408.5**

(22) Date of filing: **03.06.2005**

(86) International application number:
**PCT/JP2005/010275**

(87) International publication number:
**WO 2005/118289 (15.12.2005 Gazette 2005/50)**

(54) **GAS-BARRIER MULTILAYER STRUCTURE AND PROCESS FOR PRODUCING THE SAME**

MEHRLAGIGE GASSPERRENSTRUKTUR UND HERSTELLUNGSVERFAHREN DAFÜR

STRUCTURE MULTICOUCHE ANTI-GAZ ET PROCESSUS DE PRODUCTION

(84) Designated Contracting States:
**DE FR GB IT**

(30) Priority: **04.06.2004 JP 2004167033**

(43) Date of publication of application:
**14.02.2007 Bulletin 2007/07**

(73) Proprietor: **MITSUBISHI GAS CHEMICAL
COMPANY, INC.
Chiyoda-ku,
Tokyo 100-8324 (JP)**

(72) Inventors:
• **KANDA, Tomomichi;
Mitsubishi Gas Chemical Co. Inc.
Hiratsuka-shi, Kanagawa 2540016 (JP)**

• **MARUO, Kazunobu;
Mitsubishi Gas Chemical Co. Inc.
Hiratsuka-shi, Kanagawa 2540016 (JP)**

(74) Representative: **Gille Hrabal
Patentanwälte
Brucknerstrasse 20
40593 Düsseldorf (DE)**

(56) References cited:
**JP-A- 2001 199 024    JP-A- 2002 226 612
JP-A- 2004 002 777    JP-A- 2004 098 454**

EP 1 752 286 B1

**Description**

TECHNICAL FIELD

The present invention relates to a process for producing a multi-layer structure having an excellent gas-barrier property, and more particularly to a process for producing a multi-layer structure having an excellent transparency and gas-barrier property without causing whitening and deterioration in the gas-barrier property during the stretch-thermoforming such as stretch blowing and stretching of an unstretched laminate having a gas-barrier layer.

BACKGROUND ART

Packaging materials for foods or beverages have been required to have a good transparency for a visual inspection of contents, in addition to other properties such as a high strength, a resistance to breaking and a good heat resistance for protecting contents from damaging due to environmental conditions during distribution, preservation conditions of refrigeration, etc. and treatments such as heat sterilization. Recently, the packaging materials are also required to have a good oxygen-barrier property for preventing the entrance of oxygen to suppress the oxidation of foods, and further required to have other barrier properties against fragrant components, etc. to meet the change in consumers' taste.

Thermoplastic resins, e.g., polyolefins such as polyethylene and polypropylene, polyesters such as polyethylene terephthalate and aliphatic polyamides such as nylon 6 are molded into various articles including packaging films, packaging sheets and containers such as bottles because of their transparency and excellent mechanical properties in addition to easiness of handling and processing. However, since these thermoplastic resins are poor in the barrier properties against gaseous substances such as oxygen, the packaged contents are likely to be degraded by oxidation and the freshness period of contents is shortened by the entered fragrant components.

Polyamides produced by polycondensation of xylylenediamine and an aliphatic dicarboxylic acid, for example, polyamide produced from m-xylylenediamine and adipic acid polyamide (MXD6) have been extensively used as a gas-barrier material for packaging materials because of their excellence in the strength, elastic modulus and gas-barrier property against gaseous substances such as oxygen and carbon dioxide. The use of Polyamide MXD6 as the gas-barrier layer of multi-layer structures is recently highly promoted, because polyamide MXD6 is thermally stable upon melting as compared with other gas-barrier resins, to enable the co-extrusion or co-injection molding with various kind of thermoplastic resins such as polyethylene terephthalate (PET), nylon 6 and polypropylene.

Multi-layer structures having a gas-barrier layer made of polyvinylidene chloride, an ethylene-vinyl alcohol copolymer, polyvinyl alcohol, etc., have also come to be widely used. Although excellent in gas-barrier property independent of preservation conditions, the multi-layer structure having a polyvinylidene chloride layer emits dioxin upon burning to cause environmental pollution. Ethylene-vinyl alcohol copolymer and polyvinyl alcohol are free from such environmental pollution. Although multi-layer structures having a gas-barrier layer made of these polymers are excellent in the gas-barrier property in a relatively low humidity atmosphere, the gas-barrier property is largely reduced to result in a bad state of preservation, when the contents to be preserved have a high water activity, when the package is stored in a high humidity atmosphere or when the contents are heat-sterilized after being packaged. To improve the gas-barrier property, films coated with a composition containing polyvinyl alcohol and an inorganic layered compound are proposed (Patent Documents 1 and 2). Although exhibiting a good gas-barrier property in a low humidity atmosphere, the gas-barrier property of the proposed film is largely reduced in a high humidity atmosphere because the film is mainly made of polyvinyl alcohol. Further, since ethylene-vinyl alcohol copolymer and polyvinyl alcohol are poor in the heat stability at higher temperatures, it is difficult to produce multi-layer structures by combinedly using a resin having a melt-processing temperature higher than those of these resins.

As described above, the xylylene group-containing polyamides produced by the polycondensation between xylylenediamine and an aliphatic dicarboxylic acid, in particular, polyamide MXD6, exhibit a high gas-barrier property against gaseous substances such as oxygen and carbon dioxide. As compared with ethylene-vinyl alcohol copolymer or polyvinyl alcohol, such polyamide resins are excellent in the gas-barrier property in a high humidity atmosphere, but exhibit a slightly lowered gas-barrier property in a low or medium humidity atmosphere.

In one of the methods for improving the gas-barrier property of polyamide MXD6, the polyamide resin is kneaded with a phyllosilicate in an extruder (Patent Documents 3 and 4). The gas-barrier property is improved by dispersing the phyllosilicate, which is substantially non-permeable to gaseous substances, throughout polyamide MXD6, to make the gas-barrier property in a low or medium humidity atmosphere well comparable to those of ethylene-vinyl alcohol copolymer or polyvinyl alcohol. It is known that the gas-barrier property and strength of polyamide MXD6 can be enhanced by a stretch-thermoforming. However, when a film containing the phyllosilicate is stretched by the conventional methods, the transparency is reduced and the gas-barrier property becomes insufficient because of the occurrence of fine roughness on the film surface or cracks inside the film. Patent Document 5 teaches that a multi-layer stretched film has an improved transparency when produced by laminating a thermoplastic resin layer containing no phyllosilicate on each of the surfaces of a polyamide resin composition layer in which a phyllosilicate is uniformly dispersed, and then stretching the laminate. However, the document is silent about the detailed conditions for stretching polyamide MXD6 containing the phyllosilicate and the specific properties of the multi-layer structure obtained under specific stretching conditions.

Patent Document 1: JP 7-251874A
Patent Document 2: JP 7-304128A
Patent Document 3: JP 2-305828A
Patent Document 4: JP 8-53572A
Patent Document 5: JP 2002-29012A

DISCLOSURE OF THE INVENTION

An object of the present invention is to provide a process for producing a multi-layer structure having a gas barrier layer which is excellent in the transparency and gas-barrier property, and for producing the multi-layer structure with a little whitening and reduction in the gas-barrier property each being caused by fine cracks in resins which can occur during the stretch-blowing for the production of multi-layer bottles or the stretching for the production of multi-layer films.

As a result of extensive studies in view of the above object, the inventors have found that a multi-layer structure has an excellent transparency and gas-barrier property when produced by laminating a specific composite resin layer and a thermoplastic resin layer and then stretch-thermoforming the resultant laminate under specific conditions so as to allow the multi-layer structure to have specific properties. The present invention has been accomplished on the basis of this finding.

The present invention relates to a process for producing a gas-barrier, multi-layer hollow container, including the steps of:

forming a multi-layer parison comprising at least one gas barrier layer 1 made of a composite resin C and at least one resin layer 2 made of a thermoplastic resin D having a glass transition point lower than that of the composite resin C; and

blow-molding the multi-layer parison by biaxial stretching at a temperature equal to or higher than the glass transition point of the composite resin C;

wherein the composite resin C comprises 92 to 99% by weight of a polyamide resin A and 8 to 1% by weight of a phyllosilicate B treated with an organic swelling agent, the polyamide resin A being constituted by a diamine unit containing 70 mol % or higher of m-xylylenediamine unit and a dicarboxylic acid unit containing 70 mol % or higher of a $C_4$-$C_{20}$ $\alpha,\omega$- linear aliphatic dicarboxylic acid unit; and

wherein the blow-molding temperature and the preheating time before biaxial stretching blow-molding are set at values which were found in a test on a single-layer unstretched film made of the same composite resin C as present in the multi-layer parison to lead to a maximum stretching stress of 0.2 to 2.0 MPa, when said single-layer unstretched film having a thickness of 180 $\mu$m is subjected to a simultaneous biaxial stretching at a linear velocity of 60%/s in each stretching direction and at a stretch ratio of 3 x 3 times.

PREFERRED EMBODIMENTS OF THE INVENTION

The polyamide resin A is produced by melt-polycondensing a diamine component with a dicarboxylic acid component, or by further subjecting the melt-polycondensation product to a solid-phase polymerization. The diamine unit of the polyamide resin A is required to contain 70 mol % or higher of a m-xylylenediamine unit to maintain a good gas-barrier property. Examples of diamines other than m-xylylenediamine include, but are not limited to, aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin and bis(aminomethyl)tricyclodecane; and aromatic ring-containing diamines such as bis(4-aminophenyl) ether, p-phenylenediamine, p-xylylenediamine and bis(aminomethyl)naphthalene.

The dicarboxylic acid unit of the polyamide resin A contains 70 mol % or higher, preferably 80 mol % or higher and more preferably 90 mol % or higher of a $C_4$-$C_{20}$ $\alpha,\omega$-linear aliphatic dicarboxylic acid unit. Examples of the $C_4$-$C_{20}$ $\alpha,\omega$-linear aliphatic dicarboxylic acid include aliphatic dicarboxylic acids such as succinic acid, glutaric acid, pimelic acid, suberic acid, azelaic acid, adipic acid, sebacic acid, undecanedioic acid and dodecanedioic acid, with adipic acid being particularly preferred. If the content is 70 mol % or higher, the reduction of the gas-barrier property and an excessive reduction of the crystallizability can be avoided. Examples of dicarboxylic acids other than the $C_4$-$C_{20}$ $\alpha,\omega$-linear aliphatic

dicarboxylic acid include aromatic dicarboxylic acids such as terephthalic acid, isophthalic acid and 2,6-naphthalenedicarboxylic acid.

The polyamide resin A may contain a small amount of a unit derived from a monoamine or a monocarboxylic acid used in the polycondensation as a molecular weight modifier.

In the melt polycondensation, for example, a nylon salt of a diamine component and dicarboxylic acid component is heated under pressure in the presence of water and then polymerized in a molten state while removing the water added and the water generated by the polycondensation. Alternatively, the polyamide may be produced by the polycondensation in which a diamine component is directly added to a molten dicarboxylic acid component. In this method, the diamine component is continuously added to the dicarboxylic acid component so as to keep the reaction system in a homogeneous liquid state while allowing the polycondensation to proceed under heating so as to prevent the reaction temperature from being lowered below the melting points of oligoamides and polyamides being produced during the addition.

The polyamide obtained by the melt polycondensation having a relatively low molecular weight generally has a relative viscosity of about 2.28. In the present invention, the relative viscosity is measured at 25°C on a solution of one gram of the polyamide resin in 100 ml of a 96% aqueous solution of sulfuric acid. When the relative viscosity is 2.28 or lower, the polyamide obtained by the melt polycondensation has a good color tone and a high quality with a little gelled matter. The relatively low-molecular polyamide resin produced by the melt polycondensation is then subjected to a solid-phase polymerization. The solid-phase polymerization is performed by heating a pellet or powder of the relatively low-molecular polyamide resin to a temperature in the range of from 150°C to the melting point of the polyamide under reduced pressure or in an inert gas atmosphere.

The relative viscosity of the polyamide resin A is preferably from 1.8 to 3.9, more preferably from 2.4 to 3.7 and still more preferably from 2.5 to 3.7. Within the above range, the polyamide resin is easily and properly molded into hollow containers, films or sheets each having good properties, in particular, good mechanical properties. Although the effect of the present invention can be attained to some extent by the use of the relatively low-molecular polyamide resin after the melt polycondensation, such polyamide resin is not practically suitable as the materials for the hollow containers, because the mechanical strength, in particular, impact resistance is unsatisfactory. The phyllosilicate B is dispersed in the polyamide resin A by a melt kneading in some cases. If the relative viscosity is less than 1.8, the phyllosilicate B is difficult to be dispersed because of the excessively low viscosity of the molten resin and aggregated to impair the appearance of films. A polyamide resin A having a relative viscosity of more than 3.9 will be difficult to produce, and if produced, a special apparatus would be needed for melt-kneading such resin. The dispersibility of the phyllosilicate B is enhanced when the relative viscosity is from 1.8 to 3.9, because an adequate pressure is applied to the resin during the kneading for extrusion.

The polyamide resin A may contain various additives, e.g., impact modifiers such as elastomers; nucleating agents; lubricants such as aliphatic acid amides and aliphatic acid metal salts; antioxidants such as copper compounds, organic or inorganic halogen compounds, hindered phenol compounds, hindered amine compounds, hydrazine compounds, sulfur compounds, and phosphorus compounds such as sodium hypophosphite, potassium hypophosphite, calcium hypophosphite and magnesium hypophosphite; heat stabilizers; coloring inhibitors; ultraviolet absorbers such as benzotriazoles; mold release agents; plasticizers; colorants; and flame retardants.

The content of the polyamide resin A is from 92 to 99% by weight and preferably from 95 to 98.5% by weight on the basis of the weight of the composite resin C (i.e., total weight of the polyamide resin A and the phyllosilicate B).

The phyllosilicate is a 2-octahedral or 3-octahedral phyllosilicate having an electric charge density of 0.25 to 0.6. Examples of the 2-octahedral phyllosilicate include montmorillonite and beidellite, and examples of the 3-octahedral phyllosilicate include hectorite and saponite, with montmorillonite being preferred.

The phyllosilicate B is produced by contacting a phyllosilicate with an organic swelling agent such as polymer compounds and organic compounds. Exchangeable inorganic cations such ions of sodium, potassium and calcium present between layers of the phyllosilicate are exchanged with ions of the organic swelling agent by such contact treatment to broaden the interlaminar distance, thereby increasing the affinity to polymer compounds. Examples of the organic swelling agent include halogen salts of ammonium, phosphonium and sulfonium, with ammonium salts and phosphonium salts being preferred and ammonium salts being more preferred. The ammonium salts may be primary, secondary, tertiary or quaternary. To enhance the effect of broadening the interlaminar distance, the ammonium salts preferably have a substituent group having 12 or more carbon atoms.

Specific examples of the organic swelling agent include trimethylalkyl ammonium salts such as trimethyldodecyl ammonium salts, trimethyltetradecyl ammonium salts, trimethylhexadecyl ammonium salts, trimethyloctadecyl ammonium salts and trimethyleicosyl ammonium salts; trimethylalkenyl ammonium salts such as trimethyloctadecenyl ammonium salts and trimethyloctadecadienyl ammonium salts; triethylalkyl ammonium salts such as triethyldodecyl ammonium salts, triethyltetradecyl ammonium salts, triethylhexadecyl ammonium salts and triethyloctadecyl ammonium salts; tributylalkyl ammonium salts such as tributyldodecyl ammonium salts, tributyltetradecyl ammonium salts, tributylhexadecyl ammonium salts and tributyloctadecyl ammonium salts; dimethyldialkyl ammonium salts such as dimethyldidodecyl ammonium salts, dimethylditetradecyl ammonium salts, dimethyldihexadecyl ammonium salts, dimethyldioctadecyl ammonium salts and dimethylditallow ammonium salts; dimethyldialkenyl ammonium salts such as dimethyldioctadecenyl ammonium salts and dimethyldioctadecadienyl ammonium salts; diethyldialkyl ammonium salts such as diethyldidodecyl ammonium salts, diethylditetradecyl ammonium salts, diethyldihexadecyl ammonium salts and diethyldioctadecyl ammonium salts; dibutyldialkyl ammonium salts such as dibutyldidodecyl ammonium salts, dibutylditetradecyl ammonium salts, dibutyldihexadecyl amnionium salts and dibutyldioctadecyl ammonium salts; methylbenzylalkyl ammonium salts such as methylbenzyldihexadecyl ammonium salts; dibenzyldialkyl ammonium salts such as dibenzyldihexadecyl ammonium salts; trialkylmethyl ammonium salts such as tridodecylmethyl ammonium salts, tritetradecylmethyl ammonium salts and trioctadecylmethyl ammonium salts; trialkylethyl ammonium salts such as tridodecylethyl ammonium salts; trialkylbutyl ammonium salts such as tridodecylbutyl ammonium salts; and ω-aminoacids such as 4-amino-n-butyric acid, 6-amino-n-caproic acid, 8-aminocaprylic acid, 10-aminodecanoic acid, 12-aminododecanoic acid, 14-aminotetradecanoic acid, 16-aminohexadecanoic acid and 18-aminooctadecanoic acid.

Further, polyamides and/or polyamide oligomers produced from a diamine and a dicarboxylic acid, which have an amino group and/or an ammonium salt group at one or both terminal ends, may be used as the organic swelling agent. Examples of the diamine include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, bis(aminomethyl)decalin and bis(aminomethyl)tricyclodecane; and aromatic ring-containing diamines such as bis(4-aminophenyl)ether, p-phenylenediamine, m-xylylenediamine, p-xylylenediamine and bis(aminomethyl)naphthalene. Examples of the dicarboxylic acid include α,ω-linear aliphatic dicarboxylic acids such as succinic acid, glutaric acid, pimelic acid, suberic acid, azelaic acid, adipic acid, sebacic acid, undecanedioic acid and dodecanedioic acid; and aromatic dicarboxylic acids such as terephthalic acid, isophthalic acid and 2,6-naphthalenedicarboxylic acid. To enhance the affinity with the polyamide resin A, the diamine and dicarboxylic acid are preferably similar to those constituting the polyamide resin A.

Other examples of the organic swelling agents include hydroxyl group and/or ether group-containing ammonium salts, for example, methyldihydroxyethyl hydrogenated tallow ammonium salts and quaternary ammonium salts having at least one alkylene glycol residue, such as methyldialkyl(PAG) ammonium salts, ethyldialkyl(PAG) ammonium salts, butyldialkyl(PAG) ammonium salts, dimethylbis(PAG) ammonium salts, diethylbis(PAG) ammonium salts, dibutylbis (PAG) ammonium salts, methylalkylbis(PAG) ammonium salts, ethylalkylbis(PAG) ammonium salts, butylalkylbis(PAG) ammonium salts, methyltri(PAG) ammonium salts, ethyltri(PAG) ammonium salts, butyltri(PAG) ammonium salts and tetra(PAG) ammonium salts, wherein "alkyl" represents an alkyl group having 12 or more carbon atoms such as dodecyl, tetradecyl, hexadecyl, octadecyl and eicosyl; and "PAG" represents a polyalkylene glycol residue and preferably a polyethylene glycol or polypropylene glycol residue having 20 or less carbon atoms.

Preferred organic swelling agents are trimethyldodecyl ammonium salts, trimethyltetradecyl ammonium salts, trimethylhexadecyl ammonium salts, trimethyloctadecyl ammonium salts, dimethyldidodecyl ammonium salts, dimethylditetradecyl ammonium salts, dimethyldihexadecyl ammonium salts, dimethyldioctadecyl ammonium salts, dimethylditallow ammonium salts and methyldihydroxyethyl hydrogenated tallow ammonium salts. These organic swelling agents may be used alone or in combination of two or more.

The mixing ratio of the phyllosilicate B is from 1 to 8% by weight and preferably from 1.5 to 5% by weight on the basis of the weight of the composite resin C. Within the above range, the gas-barrier property is improved and the transparency is not impaired.

The phyllosilicate B is preferably dispersed uniformly in the composite resin C without local aggregation. The term "uniform dispersion" used herein means a state where the phyllosilicate B in the polyamide resin A is separated into flat plates, 50% or more of the flat plates having an interlaminar distance of 5 nm or more. The "interlaminar distance" used herein means a distance between gravity centers of the flat plates. The larger the interlaminar distance, the better the dispersed state, to make the appearance such as transparency of the molded articles such as bottles and films good and improve the gas-barrier property against gaseous substances such as oxygen and carbon dioxide.

For example, the composite resin C is produced by, but not limited to, a method of melt-kneading the polyamide resin A with the phyllosilicate B in an ordinary single or twin-screw extruder, or a method of adding the phyllosilicate B during the synthesis of the polyamide resin A under mixing, with the melt-kneading method using a twin-screw extruder being preferred. In the melt-kneading method using a twin-screw extruder, the melt-kneading temperature is preferably set within a range from about the melting point of the polyamide resin A to the melting point + 60°C and the residence time of the resin within the extruder is preferably as short as possible. The portion of a screw to be disposed in the extruder where the polyamide resin A and the phyllosilicate B are mixed is preferably constructed by a combination of parts such as an inverse screw element and a kneading disk, because the phyllosilicate B is efficiently dispersed. When adding the phyllosilicate B during the synthesis of the polyamide resin A, the mixing is effected by a method in which the phyllosilicate B is added to an aqueous solution of nylon salt and then the polycondensation is allowed to proceed, a method in which the phyllosilicate B is added to a diamine component and/or a dicarboxylic acid component and then the polycondensation is allowed to proceed while adding the diamine component to the molten dicarboxylic acid component, or a method in which the phyllosilicate B is added to the reaction system during the polycondensation. Since it is difficult to fit a mixing device with a sufficient dispersing capacity to the apparatus for polyamide polycondensation, the phyllosilicate B is preferably added to the raw material for the polyamide or to the reaction system at an initial stage of the polycondensation.

The glass transition point of the composite resin C is preferably from 60 to 120°C. Examples of the thermoplastic resin D having a glass transition point lower than that of the composite resin C include, but are not limited to, polyethylenes such as low-density polyethylene, medium-density polyethylene and high-density polyethylene; polypropylenes such as propylene homopolymer, propylene-ethylene block copolymer and propylene-ethylene random copolymer; polyolefins such as ethylene-butene copolymer, ethylene-hexene copolymer, ethylene-octene copolymer, ethylene-vinyl acetate copolymer, ethylene-methyl methacrylate copolymer, propylene-$\alpha$-olefin copolymer, polybutene, polypentene and ionomer resins; polyester resins such as polyethylene terephthalate; polyamide resins such as nylon 6, nylon 66 and nylon 666; and easy-to-peel thermoplastic resins . The layer 2 is formed from one or more of these resins.

The layer 2 may contain an additive, e.g., impact modifier such as elastomer; nucleating agent; lubricants such as aliphatic acid amide compound and aliphatic acid metal salt; antioxidant such as copper compound, organic or inorganic halogen compound, hindered phenol compound, hindered amine compound, hydrazine compound, sulfur compound, and phosphorus compound such as sodium hypophosphite, potassium hypophosphite, calcium hypophosphite and magnesium hypophosphite; heat stabilizer; coloring inhibitor; ultraviolet absorber such as benzotriazole compound; mold release agent; plasticizer; colorant; flame retardant; inorganic pigment such as titanium oxide; and organic pigment such as dye.

The number of laminated layers of the gas-barrier, multi-layer hollow container is not particularly limited as long as at least one gas-barrier layer 1 mainly made of the composite resin C and at least one layer 2 made of the thermoplastic resin D are included. The gas-barrier, multi-layer structure may contain a layer 3 made of another material. Examples of the layered structure include layer 2/layer 1/layer 2, layer 2/layer 1/layer 2/layer 1/layer 2, layer 1/layer 2/layer 2, and layer 2/layer 1/layer 2/layer 2. If required, an adhesive resin layer made of a modified polyolefin resin, etc., may be interposed between at least one pair of adjacent layers. Further, to improve the mechanical properties and enhance the commercial value, the multi-layer structure may be extrusion-laminated or dry-laminated with a non-stretched or stretched film made of polyester, polyamide, polypropylene, etc. The thickness of each gas-barrier layer 1 is preferably from 1 to 150 $\mu$m, and the thickness of each layer 2 is preferably from 20 to 800 $\mu$m.

Next, the process of the invention for producing the gas-barrier, multi-layer structure is described. First, a multi-layer laminate the parison including at least one layer 1, at least one layer 2 and an optional layer 3 is produced by a known method.

Then, the multi-layer laminate is blow-molded under specific conditions to increase the crystallinity and orientation degree of the layer 1, thereby improving the gas-barrier property. The blow-molding is performed generally at a temperature equal to or higher than the glass transition point of the resin material. Since the glass transition point varies depending upon the kind of resin and the degree of moisture absorption, the thermoformability at temperatures equal to or higher than the glass transition point of composite resin materials differs largely according to the composition of the composite resin materials. If the resin material is crystallizable, an excessively long preheating time causes the crystallization to make the difficult in some cases. Therefore, the blow-molding of the multi-layer laminate should be performed taking the combination of the kinds of resins which constitute the layers into consideration. In the production process of the present invention, the blow-molding temperature and the preheating time before stretching are controlled such that a single-layer unstretched film made of the composite resin C is subject to a maximum stretching stress of 0.2 to 2.0 MPa per unit sectional area thereof when the single-layer unstretched film is subjected to a simultaneous biaxial stretching at a linear velocity of 60%/s in each stretching direction and a stretch ratio of 3 x 3 times. The blow-molding temperature of the multi-layer laminate is equal to or higher than the glass transition point of the composite resin C. The "preheating time before stretching" used herein means a period of time between the initiation of heating the multi-layer laminate and the initiation of the blow-molding.

The blow-molding should be performed while considering the stretching stress on the layer 1 which is made of the composite resin C having the highest glass transition point. The stretchability of the composite resin C is largely influenced by the polyamide resin A and the phyllosilicate B which form the composite resin C. Since the glass transition point and crystallization speed of the polyamide resin A vary depending upon the composition of constitutional units, the blow-molding temperature and the preheating time before stretching should be appropriately selected. Since the phyllosilicate B is added, the composite resin C is subject to a larger stretching stress to cause a large change in the crystallization speed, as compared with the polyamide resin A. Therefore, the mixing amount of the phyllosilicate B is required to be suitably selected so as to attain an adequate blow-molding temperature and preheating time before stretching. In the present invention, the blow-molding temperature and the preheating time before stretching, which cause a maximum stretching stress of 0.2 to 2.0 MPa on a single-layer unstretched film made of the composite resin C per unit sectional area, are determined in advance by subjecting the single-layer unstretched film to a simultaneous biaxial stretching at a linear velocity of 60%/s in each stretching direction and a stretch ratio of 3 x 3 times. By blow-molding the multi-layer laminate at the determined blow-molding temperature and preheating time before stretching, the aimed multi-layer structure having an excellent gas-barrier property and transparency is obtained. If the blow-molding is performed at a temperature and a preheating time before stretching which cause a maximum stretching stress exceeding 2.0 MPa, the multi-layer structure may be broken and fine cracks may occur near the interface between the phyllosilicate B and the polyamide resin A to reduce the gas-barrier property and transparency. Under conditions which cause a maximum stretching stress of less than 0.2 MPa, the blow-molding is possible but a sufficient stretching effect due to the orientation of resin is not obtained.

The heat of crystallization of the gas-barrier layer 1 after the stretch-thermoforming is preferably from 0 to 20 J/g when measured at a temperature rise rate of 10°C/min using a differential scanning calorimeter (DSC). Within the above range, the gas-barrier layer 1 is sufficiently crystallized, to improve the gas-barrier property.

The haze of the gas-barrier hollow container obtained by the process of the present invention is preferably equal to or higher than 0% but less than 10% when measured according to ASTM D-1003.

The orientation degree of the gas-barrier layer 1 after the stretch-thermoforming represented by the following formula I:

$$\text{Orientation Degree} = [(\text{refractive index in in-plane direction}) - (\text{refractive index in thickness direction})] \times 1000 \qquad (I)$$

is preferably from 10 to 45.

Each refractive index in the formula I is measured at 23°C with a sodium D ray (589 nm) using an Abbe refractometer. With the orientation degree within the above range, the resin is sufficiently oriented by the blow-molding, to improve the gas-barrier property and mechanical properties.

The gas-barrier multi-layer hollow container has the shape of a multi-layer bottle. The shape is not particularly limited as long as the multi-layer hollow container has a gas-barrier property, transparency and mechanical properties which are improved by the blow-molding of the present invention.

The strength, gas-barrier property and mechanical properties of the multi-layer hollow container can be further improved by a heat-setting treatment to relax the residual stress caused in the blow-molding process and promote the crystallization further. The heat-setting treatment is performed at a temperature equal to or higher than the stretch-thermoforming temperature while fixing the both ends of the film after the blow-molding or applying inner pressure to a blown container in a mold so as to prevent the deformation.

In the multi-layer hollow container (injection/stretch blow-molded hollow container), it is preferred that the outermost and innermost layers are formed by the layer 2, and at least one layer 1 is interposed between the outermost and innermost layers. Examples of the thermoplastic resin D for forming the layer 2 include polyesters in which preferably 80 mol% or more and more preferably 90 mol% or more of the dicarboxylic acid unit is terephthalic acid unit, and preferably 80 mol% or more and more preferably 90 mol% or more of the diol unit is ethylene glycol unit. Examples of the dicarboxylic acid unit other than terephthalic acid unit include units derived from dicarboxylic acids such as isophthalic acid, diphenyl ether-4,4-dicarboxylic acid, naphthalene-1,4- or 2,6-dicarboxylic acid, adipic acid, sebacic acid, decane-1,10-carboxylic acid and hexahydroterephthalic acid. Examples of the diol unit other than ethylene glycol unit include units derived from diols such as propylene glycol, 1,4-butanediol, neopentyl glycol, diethylene glycol, cyclohexane dimethanol, 2,2-bis(4-hydroxyphenyl)propane, 2,2-bis(4-hydroxyethoxyphenyl)propane. Other examples of the thermoplastic resin D include polyester resins containing units derived from oxy acids such as p-oxybenzoic acid.

In the multi-layer hollow container, the intrinsic viscosity of the thermoplastic resin D is preferably from 0.55 to 1.5 and more preferably from 0.65 to 1.4. If being 0.55 or more, a multi-layer parison having a good transparency is obtained in amorphous state and the multi-layer hollow container has a sufficient mechanical strength. In the present invention, most preferred is a combination of the layer 2 made of polyethylene terephthalate (thermoplastic resin D) and the gas-barrier layer 1 made of the composite resin C composed of polyamide MXD6 (polyamide resin A) and the phyllosilicate B. This is because these resins are excellent in all the transparency, mechanical strength, injection moldability and stretch blow moldability.

The multi-layer hollow container may be produced using an injection molding machine having two injection cylinders, one being a skin-side injection cylinder for the thermoplastic resin D and the other being a core-side injection cylinder for a resin mainly composed of the composite resin C. The thermoplastic resin D and the resin mainly containing the composite resin C are injected into a mold cavity from the respective injection cylinders through mold hot runners, and the resultant multi-layer parison is blow-molded by biaxial stretching.

For example, a three-layer parison of layer 2/layer 1/layer 2 is produced by first injecting the thermoplastic resin D, then simultaneously injecting the resin mainly containing the composite resin C and the thermoplastic resin D, and further injecting the thermoplastic resin D in an amount required to fill the mold cavity.

Similarly, a five-layer parison of layer 2/layer 1/layer 2/layer 1/layer 2 is produced by first injecting the thermoplastic resin D, then injecting only the resin mainly containing the composite resin C, and finally injecting the thermoplastic resin D to fill the mold cavity. The method for producing the multi-layer parison is not particularly limited to the above methods.

The multi-layer structure produced by the biaxial stretch blow molding of the multi-layer parison exhibits the gas-barrier property as long as its barrel portion includes the gas-barrier layer 1. The gas-barrier property is further enhanced if the gas-barrier layer 1 extends to the vicinity of open top end of the multi-layer structure.

In the multi-layer hollow container, the gas-barrier layer 1 may contain at least one anti-whitening agent selected from the group consisting of diamide compounds obtained from an aliphatic acid having 8 to 30 carbon atoms and a diamine having 2 to 10 carbon atoms and diester compounds obtained from an aliphatic acid having 8 to 30 carbon atoms and a diol having 2 to 10 carbon atoms. The aliphatic acid may have a side chain or a double bond, but preferably a linear saturated aliphatic acid.

Examples of the aliphatic acid include stearic acid (C18), eicosanoic acid (C20), behenic acid (C22), montanoic acid (C28) and triacontanoic acid (C30). Examples of the diamine include ethylenediamine, butylenediamine, hexanediamine, xylylenediamine and bis(aminomethyl)cyclohexane. The diamide compounds may be used alone or in combination of two or more. Preferred diamide compounds are those obtained from an aliphatic acid having 8 to 30 carbon atoms and a diamine mainly composed of ethylenediamine, and diamide compounds obtained from an aliphatic acid mainly composed of montanoic acid and a diamine having 2 to 10 carbon atoms.

Examples of the diol include ethylene glycol, propanediol, butanediol, hexanediol, xylylene glycol and cyclohexane dimethanol. The diester compounds may be used alone or in combination of two or more. Particularly preferred diester compounds are those obtained from an aliphatic acid mainly composed of montanoic acid and a diol mainly composed of ethylene glycol and/or 1,3-butanediol.

The mixing ratio of the diamide compound and/or the diester compound is preferably from 0.005 to 1.0 part by weight, more preferably from 0.05 to 0.5 part by weight and still more preferably from 0.12 to 0.5 part by weight on the basis of 100 parts by weight of the composite resin C. Within the above range, the whitening due to the crystallization of the polyamide resin A is prevented, to make the haze of the multi-layer structure low.

The multi-layer stretched sheet and the multi-layer sheet container produced by the stretch-thermoforming of the multi-layer sheet are produced by stretch-thermoforming a co-extruded multi-layer laminate having the layer 1, the layer 2 and an intermediate layer formed by the layer 1. The co-extrusion is conducted by a known method such as a T-die method and an inflation method. It is preferred to use the layer 1 as the intermediate layer rather than as an outer layer, because the surface of the layer 1 is prevented from being roughened, to reduce the haze of the multi-layer structure. The stretch-thermoforming may be conducted by a known method such as a tenter method and a blow stretching method. To prevent the deformation due to the absorption of moisture and to further improve the gas-barrier property by increasing the crystallinity, the heat setting by re-heating can be employed after the stretch-thermoforming. Polyolefins and aliphatic polyamides are preferably used as the thermoplastic resin D.

In the production of the multi-layer stretched film by the co-extrusion method, it is preferred to avoid an excessively large draft ratio. If excessively large, fine voids may be formed around the phyllosilicate B in the composite resin C, to reduce the gas-barrier property and impair the appearance by increasing the haze.

The gas-barrier, multi-layer structure forms the whole part of a gas-barrier multi-layer container or forms at least a part thereof. The multi-layer structure such as a multi-layer bottle, a multi-layer stretched film and a multi-layer sheet container which are produced by subjecting a co-extruded or co-injection molded product to the stretch-thermoforming may be used as the gas-barrier multi-layer container with or without bonding the layers by a slight heating, a heat sealing or other methods.

The gas-barrier multi-layer container may be used for storing and preserving various products. Examples of such products include liquid beverages such as carbonated beverage, juice, water, milk, sake, whisky, shochu, coffee, tea, jelly beverage and healthy beverage; seasonings such as liquid seasoning, sauce, soy sauce, dressing, liquid soup stock, mayonnaise, miso and grated spices; processed meat products such as ham and sausage; pasty foodstuffs such as jam, cream and chocolate paste; liquid foodstuffs, for example, processed liquid foodstuffs such as liquid soup, boiled food, pickles and stew; raw or boiled noodles such as buckwheat noodle, wheat noodle and Chinese noodle; uncooked rice such as polished rice, water-conditioned rice and washing-free rice; processed rice products such as cooked rice, cooked rice with fish and vegetables, cooked rice with red beans and rice gruel; high water-content foodstuffs, for example, powdery seasonings such as powdery soup and powdery soup stock; low water-content foodstuffs such as dried vegetables, coffee beans, coffee powder, roasted tea, confectioneries made of cereals, solid and liquid chemicals such as agricultural chemicals and insecticides; and liquid or pasty products of drugs, beauty wash, cosmetic cream, milky lotion, hair dressing, hair dye, shampoo, soap and detergent.

The gas-barrier multi-layer container produced according to the present invention is suitable particularly for a packaging container for products having a high water activity, a packaging container exposed to high humidity, and a packaging container subjected to heat sterilization treatment such as retorting and boiling.

EXAMPLES

The present invention will be described in more detail below with reference to the following examples and comparative examples. However, these examples are only illustrative and not intended to limit the invention thereto. In the following examples and comparative examples, various properties were measured and evaluated by the following methods.

(1) Melting Point, Glass Transition Point and Heat of Temperature-Rise

Crystallization

Measured using a heat-flow differential scanning colorimeter "DSC-50" available from Shimadzu Corporation under the following conditions:

Standard: α-alumina
Sample: 10 mg
Temperature rise rate: 10°C/min
Measuring temperature range: 25 to 300°C
Atmosphere: nitrogen gas of 30 mL/min

(2) Haze

Measured according to ASTM D-1003 using a color haze measuring equipment "COH-300A" available from Nippon Denshoku Industries Co., Ltd.

(3) Oxygen Permeability

Measured according to JIS K-7126 (ASTM D3985) at 23°C and a relative humidity of 60% using an oxygen permeability meter (Model: OX-TRAN 10/50A) available from Modern Controls, Inc.

(4) Orientation Degree

Using an Abbe refractometer "DR-M2" available from Atago Co., Ltd., birefringences in the in-plane direction and in the thickness direction were measured at 23°C with a sodium D ray (589 nm). The orientation degree was calculate from the following formula I:

$$\text{Orientation Degree} = [(\text{refractive index in in-plane direction}) - (\text{refractive index in thickness direction})] \times 1000 \qquad (I)$$

PRODUCTION OF COMPOSITE RESINS C1 to C5

A dry blend of polyamide MXD6 ("MX Nylon S6007" available from Mitsubishi Gas Chemical Co., Ltd.) and a phyllosilicate B ("Orben" available from Shiraishi Kogyo Co., Ltd. containing 34% by weight of trimethyloctadecyl ammonium as a swelling agent) was fed at a feed rate of 6 kg/h to a co-rotating twin-screw extruder (cylinder diameter: 20 mmϕ) which was equipped with a screw having a retention zone composed of an inverse element, melt-kneaded at a cylinder temperature of 270°C, and then extruded through the extruder head into a form of strand which was then cooled and pelletized, to obtain each of the composite resins C1 to C5. The compositions, melting points and glass transition points of the obtained composite resins are shown in Table 1.

Table 1

| | C1 | C2 | C3 | C4 | C5 |
|---|---|---|---|---|---|
| Composition (wt %) | | | | | |
| Polyamide MXD6 | 99 | 97 | 95 | 93 | 90 |
| Phyllosilicate B | 1 | 3 | 5 | 7 | 10 |
| Melting point (°C) | 239 | 239 | 239 | 239 | 239 |
| Glass transition point (°C) | 86 | 86 | 86 | 86 | 86 |

REFERENCE EXAMPLE 1

The composite resin C1 was formed into a single-layer unstretched film having a thickness of 180 $\mu$m at 260°C using a small-sized film forming machine ("Labo Plastomil" available from Toyo Seiki Seisaku-Sho, Ltd.; screw diameter: 20 mm$\phi$; T-die width: 200 mm). The obtained unstretched film was subjected to simultaneous biaxial stretching using a tentering biaxially stretching machine available from Toyo Seiki Seisaku-Sho, Ltd. under the conditions:, stretching temperature of 100°C, preheating time of 30 s, linear velocity of 60%/s in each stretching direction, and stretch ratio of 3 x 3 times. The maximum stretching stress during the stretching was 0.7 MPa per unit sectional area, and the haze of the obtained film (thickness: 20 $\mu$m) was 0.5%. The oxygen permeability at 23°C and 60% RH was 0.05 mL·mm/m$^2$·day·atm, the heat of temperature-rise crystallization measured by DSC was 9 J/g, and the orientation degree was 19.

REFERENCE EXAMPLE 2

An unstretched film which was formed in the same manner as in Reference Example 1 except for using the composite resin C2 was subjected to simultaneous biaxial stretching under the conditions: stretching temperature of 105°C, preheating time of 30 s, linear velocity of 60%/s in each stretching direction, and stretch ratio of 3 x 3 times. The maximum stretching stress during the stretching was 1.0 MPa per unit sectional area, and the haze of the obtained film (thickness: 20 $\mu$m) was 3.2%. The oxygen permeability at 23°C and 60% RH was 0.03 mL·mm/m$^2$·day·atm, the heat of temperature-rise crystallization measured by DSC was 5 J/g, and the orientation degree was 20.

REFERENCE EXAMPLE 3

An unstretched film which was formed in the same manner as in Reference Example 1 except for using the composite resin C3 was subjected to simultaneous biaxial stretching under the conditions: stretching temperature of 110°C, preheating time of 30 s, linear velocity of 60%/s in each stretching direction, and stretch ratio of 3 x 3 times. The maximum stretching stress during the stretching was 1.4 MPa per unit sectional area, and the haze of the obtained film (thickness: 20 $\mu$m) was 3.4%. The oxygen permeability at 23°C and 60% RH was 0.02 mL·mm/m$^2$·day·atm, the heat of temperature-rise crystallization measured by DSC was 3 J/g, and the orientation degree was 29.

REFERENCE EXAMPLE 4

An unstretched film which was formed in the same manner as in Reference Example 1 except for using the composite resin C4 was subjected to simultaneous biaxial stretching under the conditions: stretching temperature of 120°C, preheating time of 20 s, linear velocity of 60%/s in each stretching direction, and stretch ratio of 3 x 3 times. The maximum stretching stress during the stretching was 1.7 MPa per unit sectional area, and the haze of the obtained film (thickness: 20 $\mu$m) was 3.5%. The oxygen permeability at 23°C and 60% RH was 0.02 mL·mm/m$^2$·day·atm, the heat of temperature-rise crystallization was not observed by DSC, and the orientation degree was 28.

REFERENCE EXAMPLE 5

An unstretched film which was formed in the same manner as in Reference Example 1 except for using the composite resin C5 was subjected to simultaneous biaxial stretching under the conditions: stretching temperature of 95°C, preheating time of 30 s, linear velocity of 60%/s in each stretching direction, and stretch ratio of 3 x 3 times. The maximum stretching stress during the stretching was 1.6 MPa per unit sectional area, and the haze of the obtained film (thickness: 20 $\mu$m) was 5.8%. The oxygen permeability at 23°C and 60% RH was 0.03 mL·mm/m$^2$·day·atm, the heat of temperature-rise crystallization measured by DSC was 17 J/g, and the orientation degree was 20.

REFERENCE EXAMPLE 6

An unstretched film which was formed in the same manner as in Reference Example 1 except for using the composite resin C2 was subjected to simultaneous biaxial stretching under the conditions: stretching temperature of 120°C, preheating time of 20 s, linear velocity of 60%/s in each stretching direction, and stretch ratio of 3 x 3 times. The maximum stretching stress during the stretching was 0.3 MPa per unit sectional area, and the haze of the obtained film (thickness: 20 $\mu$m) was 3.4%. The oxygen permeability at 23°C and 60% RH was 0.03 mL·mm/m$^2$·day·atm, the heat of temperature-rise crystallization was not observed by DSC, and the orientation degree was 16.

REFERENCE EXAMPLE 7

An unstretched film which was formed in the same manner as in Reference Example 1 except for using the composite resin C3 was subjected to simultaneous biaxial stretching under the conditions: stretching temperature of 95°C, preheating time of 30 s, linear velocity of 60%/s in each stretching direction, and stretch ratio of 3 x 3 times. The maximum stretching stress during the stretching was 2.2 MPa per unit sectional area, and the haze of the obtained film (thickness: 20 $\mu$m) was 13.1%. The oxygen permeability at 23°C and 60% RH was 0.06 mL·mm/m$^2$·day·atm, the heat of temperature-rise crystallization measured by DSC was 35 J/g, and the orientation degree was 23.

REFERENCE EXAMPLE 8

An unstretched film which was formed in the same manner as in Reference Example 1 except for using the composite resin C2 was subjected to simultaneous biaxial stretching under the conditions: stretching temperature of 135°C, preheating time of 15 s, linear velocity of 60%/s in each stretching direction, and stretch ratio of 3 x 3 times. The maximum stretching stress during the stretching was 0.1 MPa per unit sectional area, and the haze of the obtained film (thickness: 20 $\mu$m) was 8.2%. The oxygen permeability at 23°C and 60% RH was 0.05 mL·mm/m$^2$·day·atm, the heat of temperature-rise crystallization was not observed by DSC, and the orientation degree was 7.

REFERENCE EXAMPLE 9

An unstretched film which was formed in the same manner as in Reference Example 1 except for using the composite resin C5 was subjected to simultaneous biaxial stretching under the conditions: stretching temperature of 135°C, preheating time of 15 s, linear velocity of 60%/s in each stretching direction, and stretch ratio of 3 x 3 times. The maximum stretching stress during the stretching was 2.5 MPa per unit sectional area, and the haze of the obtained film (thickness: 20 $\mu$m) was 18.9%. The oxygen permeability at 23°C and 60% RH was 0.08 mL·mmhn$^2$·day·atm, the heat of temperature-rise crystallization was not observed by DSC, and the orientation degree was 25.

REFERENCE EXAMPLE 10

An unstretched film which was formed in the same manner as in Reference Example 1 except for using only polyamide MXD6 was subjected to simultaneous biaxial stretching under the conditions: stretching temperature of 95°C, preheating time of 30 s, linear velocity of 60%/s in each stretching direction, and stretch ratio of 3 x 3 times. The maximum stretching stress during the stretching was 0.3 MPa per unit sectional area, and the haze of the obtained film (thickness: 20 $\mu$m) was 0.2%. The oxygen permeability at 23°C and 60% RH was 0.08 mL·mm/m$^2$·day·atm, the heat of temperature-rise crystallization measured by DSC was 12 J/g, and the orientation degree was 17.

EXAMPLE 1

Using a composite resin C1', which was prepared by blending 100 parts by weight of the composite resin C1 and 0.05 part by weight of ethylenebisstearamide ("Alflow H-50T", tradename), and polyethylene terephthalate (PET) as the thermoplastic resin ("RT543C" available from Japan Unipet Co., Ltd.; intrinsic viscosity: 0.75), a multi-layer parison was produced by the following method.
An injection cylinder a of an injection molding machine ("Model M200" (four-shot type) available from Meiki Co., Ltd.) was filled with PET for forming the outermost and innermost layers and an injection cylinder b was filled with the composite resin C1' for forming the intermediate layer. Under the following conditions, a predetermined amount of PET was first injected, then PET and the composite resin C1' wer simultaneously injected, and finally PET was injected to form a three-layer parison.
Resin temperature in injection cylinder a: 280°C
Resin temperature in injection cylinder b: 270°C

Temperature of flow path in mold: 280°C

Temperature of mold cooling water: 15°C

The injection-molded multi-layer parison had an overall length of 110 mm, an outer diameter of 26.5 mmφ and a wall thickness of 4.5 mm. The content of the composite resin C1 in the obtained three-layer parison was 7% by weight. The multi-layer parison was formed into a multi-layer bottle by a biaxial-stretching blow molding using the same temperature and preheating time as in Reference Example 1 using a stretch blow molding machine ("Model LB-01" available from Krupp Corpoplast Inc.). The obtained multi-layer bottle had an ovarall length of 223 mm, an outer diameter of 65 mmφ, a capacity of 500 mL (surface area: 0.04 m$^2$) and a petaloid bottom.

Heating temperature for parison: 100°C

Preheating time: 30 s

Blow pressure: 3.0 MPa

The multi-layer bottle was measured for the haze and the gas-barrier layer was measured for the heat of temperature-rise crystallization and orientation degree, each at the neck portion (150 mm high from the bottom) and the barrel portion (80 mm high from the bottom). The haze was 1.9% at the neck portion (thickness: 288 μm) and 1.3% at the barrel portion (thickness: 325 μm). The heat of temperature-rise crystallization was 8 J/g at the neck portion and 5 J/g at the barrel portion. The orientation degree was 14 at the neck portion and 21 at the barrel portion. The oxygen permeability of the multi-layer bottle was 0.011 mL/bottle·day·0.21 atm. The crystallinity and orientation of the gas-barrier layer was sufficiently high, and the multi-layer bottle was excellent in the transparency and gas-barrier property.

## EXAMPLE 2

A multi-layer parison was produced in the same manner as in Example 1 except for using the composite resin C2 in place of the composite resin C1, and then the multi-layer parison was formed into a multi-layer bottle by a biaxial-stretching blow molding using the same temperature and preheating time as in Reference Example 2.

Heating temperature for parison: 105°C

Preheating time: 30 s

Blow pressure: 3.0 MPa

The haze was 5.4% at the neck portion (thickness: 293 μm) and 2.9% at the barrel portion (thickness: 331 μm). The heat of temperature-rise crystallization of the gas-barrier layer was 3 J/g at the neck portion and 2 J/g at the barrel portion. The orientation degree of the gas-barrier layer was 17 at the neck portion and 22 at the barrel portion. The oxygen permeability of the multi-layer bottle was 0.007 mL/bottle·day·0.21 atm. The crystallinity and orientation of the gas-barrier layer was sufficiently high, and the multi-layer bottle was excellent in the transparency and gas-barrier property.

## EXAMPLE 3

A multi-layer parison was produced in the same manner as in Example 1 except for using the composite resin C3 in place of the composite resin C1, and then the multi-layer parison was formed into a multi-layer bottle by a biaxial-stretching blow molding using the same temperature and preheating time as in Reference Example 3.

Heating temperature for parison: 110°C

Preheating time: 30 s

Blow pressure: 3.0 MPa

The haze was 5.8% at the neck portion (thickness: 284 μm) and 2.8% at the barrel portion (thickness: 312 μm). The heat of temperature-rise crystallization of the gas-barrier layer was 2 J/g at the neck portion and 1 J/g at the barrel portion. The orientation degree of the gas-barrier layer was 27 at the neck portion and 33 at the barrel portion. The oxygen permeability of the multi-layer bottle was 0.005 mL/bottle·day·0.21 atm. The crystallinity and orientation of the gas-barrier layer was sufficiently high, and the multi-layer bottle was excellent in the transparency and gas-barrier property.

## EXAMPLE 4

A multi-layer parison was produced in the same manner as in Example 1 except for using the composite resin C4 in place of the composite resin C1, and then the multi-layer parison was formed into a multi-layer bottle by a biaxial-stretching blow molding using the same temperature and preheating time as in Reference Example 4.

Heating temperature for parison: 120°C

Preheating time: 20 s

Blow pressure: 3.0 MPa

The haze was 6.7% at the neck portion (thickness: 283 μm) and 3.6% at the barrel portion (thickness: 322 μm). The

heat of temperature-rise crystallization of the gas-barrier layer was not observed at both the neck and barrel portions. The orientation degree of the gas-barrier layer was 28 at the neck portion and 31 at the barrel portion. The oxygen permeability of the multi-layer bottle was 0.004 mL/bottle·day·0.21 atm. The crystallinity and orientation of the gas-barrier layer was sufficiently high, and the multi-layer bottle was excellent in the transparency and gas-barrier property.

EXAMPLE 5

A multi-layer parison produced in the same manner as in Example 2 was formed into a multi-layer bottle by a biaxial-stretching blow molding using the same temperature and preheating time as in Reference Example 5.
Heating temperature for parison: 95°C
Preheating time: 30 s
Blow pressure: 3.0 MPa
The haze was 9.2% at the neck portion (thickness: 281 $\mu$m) and 5.4% at the barrel portion (thickness: 308 $\mu$m). The heat of temperature-rise crystallization of the gas-barrier layer was 16 J/g at the neck portion and 13 J/g at the barrel portion. The orientation degree of the gas-barrier layer was 19 at the neck portion and 23 at the barrel portion. The oxygen permeability of the multi-layer bottle was 0.006 mL/bottle·day·0.21 atm. The crystallinity and orientation of the gas-barrier layer was sufficiently high, and the multi-layer bottle was excellent in the transparency and gas-barrier property.

EXAMPLE 6

A multi-layer parison produced in the same manner as in Example 2 was formed into a multi-layer bottle by a biaxial-stretching blow molding using the same temperature and preheating time as in Reference Example 6.
Heating temperature for parison: 120°C
Preheating time: 20 s
Blow pressure: 3.0 MPa
The haze was 4.7% at the neck portion (thickness: 297 $\mu$m) and 3.3% at the barrel portion (thickness: 314 $\mu$m). The heat of temperature-rise crystallization of the gas-barrier layer was not observed at both the neck and barrel portions. The orientation degree of the gas-barrier layer was 14 at the neck portion and 19 at the barrel portion. The oxygen permeability of the multi-layer bottle was 0.007 mL/bottle·day·0.21 atm. The crystallinity and orientation of the gas-barrier layer was sufficiently high, and the multi-layer bottle was excellent in the transparency and gas-barrier property.

COMPARATIVE EXAMPLE 1

A multi-layer parison produced in the same manner as in Example 3 was formed into a multi-layer bottle by a biaxial-stretching blow molding using the same temperature and preheating time as in Reference Example 7.
Heating temperature for parison: 95°C
Preheating time: 30 s
Blow pressure: 3.0 MPa
The haze was 28.5% at the neck portion (thickness: 281 $\mu$m) and 21.4% at the barrel portion (thickness: 311 $\mu$m). The heat of temperature-rise crystallization of the gas-barrier layer was 34 J/g at the neck portion and 28 J/g at the barrel portion. The orientation degree of the gas-barrier layer was 20 at the neck portion and 25 at the barrel portion. The oxygen permeability of the multi-layer bottle was 0.014 mL/bottle·day·0.21 atm. The crystallinity of the gas-barrier layer was insufficient, and the multi-layer bottle was poor in the transparency and gas-barrier property.

COMPARATIVE EXAMPLE 2

A multi-layer parison produced in the same manner as in Example 2 was formed into a multi-layer bottle by a biaxial-stretching blow molding using the same temperature and preheating time as in Reference Example 8.
Heating temperature for parison: 135°C
Preheating time: 15 s
Blow pressure: 3.0 MPa
The haze was 12.9% at the neck portion (thickness: 292 $\mu$m) and 10.5% at the barrel portion (thickness: 334 $\mu$m). The heat of temperature-rise crystallization of the gas-barrier layer was not observed. The orientation degree of the gas-barrier layer was 7 at the neck portion and 9 at the barrel portion. The oxygen permeability of the multi-layer bottle was 0.012 mL/bottle·day·0.21 atm. The orientation of the gas-barrier layer was insufficient, and the multi-layer bottle was poor in the transparency and gas-barrier property.

COMPARATIVE EXAMPLE 3

A multi-layer parison was produced in the same manner as in Example 1 except for using the composite resin C5 in place of the composite resin C1, and then the multi-layer parison was formed into a multi-layer bottle by a biaxial-stretching blow molding using the same temperature and preheating time as in Reference Example 9.
Heating temperature for parison: 135°C
Preheating time: 15 s
Blow pressure: 3.0 MPa
The haze was 34.5% at the neck portion (thickness: 283 $\mu$m) and 29.7% at the barrel portion (thickness: 324 $\mu$m). The heat of temperature-rise crystallization of the gas-barrier layer was not observed. The orientation degree of the gas-barrier layer was 21 at the neck portion and 28 at the barrel portion. The oxygen permeability of the multi-layer bottle was 0.015 mL/bottle·day·0.21 atm. The multi-layer bottle was poor in the transparency and gas-barrier property.

COMPARATIVE EXAMPLE 4

A multi-layer parison was produced in the same manner as in Example 1 except for using polyamide MXD6 in place of the composite resin C1, and then the multi-layer parison was formed into a multi-layer bottle by a biaxial-stretching blow molding using the same temperature and preheating time as in Reference Example 10.
Heating temperature for parison: 95°C
Preheating time: 30 s
Blow pressure: 3.0 MPa
The haze was 1.3% at the neck portion (thickness: 282 $\mu$m) and 1.0% at the barrel portion (thickness: 310 $\mu$m). The heat of temperature-rise crystallization of the gas-barrier layer was 9 J/g at the neck portion and 8 J/g at the barrel portion. The orientation degree of the gas-barrier layer was 15 at the neck portion and 19 at the barrel portion. The oxygen permeability of the multi-layer bottle was 0.017 mL/bottle·day·0.21 atm.

INDUSTRIAL APPLICABILITY

The gas-barrier, multi-layer structure made by the process of the present invention is excellent in the gas-barrier property, mechanical properties and appearance such as transparency and is therefore very useful as a packaging material for foods, beverages, chemicals and electronic parts. Thus, the present invention has a high industrial value.

**Claims**

1. A process for producing a gas-barrier, multi-layer hollow container, including the steps of:

forming a multi-layer parison comprising at least one gas barrier layer 1 made of a composite resin C and at least one resin layer 2 made of a thermoplastic resin D having a glass transition point lower than that of the composite resin C; and
blow-molding the multi-layer parison by biaxial stretching at a temperature equal to or higher than the glass transition point of the composite resin C;
wherein the composite resin C comprises 92 to 99% by weight of a polyamide resin A and 8 to 1 % by weight of a phyllosilicate B treated with an organic swelling agent, the polyamide resin A being constituted by a diamine unit containing 70 mol % or higher of m-xylylenediamine unit and a dicarboxylic acid unit containing 70 mol % or higher of a $C_4$-$C_{20}$ $\alpha,\omega$- linear aliphatic dicarboxylic acid unit; and
wherein the blow-molding temperature and the preheating time before biaxial stretching blow-molding are set at values which were found in a test on a single-layer unstretched film made of the same composite resin C as present in the multi-layer parison to lead to a maximum stretching stress of 0.2 to 2.0 MPa, when said single-layer unstretched film having a thickness of 180 $\mu$m is subjected to a simultaneous biaxial stretching at a linear velocity of 60%/s in each stretching direction and at a stretch ratio of 3 x 3 times.

**Patentansprüche**

1. Verfahren zur Herstellung eines hohlen Mehrschicht-Gasbarriere-Behälters, welches die Schritte einschließt:

Bildung eines Mehrschicht-Schlauchkopfs, umfassend mindestens eine Gasbarriere-Schicht 1, die aus einem Kompositharz C besteht, und mindestens eine Harzschicht 2, die aus einem thermoplastischen Harz D besteht, welches einen niedrigeren Glasübergangspunkt aufweist als das Kompositharz C; und

Blasformen des Mehrschicht-Schlauchkopfs durch biaxiales Strecken bei einer Temperatur, die gleich oder höher ist als der Glasübergangspunkt des Kompositharzes C;

wobei das Kompositharz C 92 bits 99 Ges.-% eines Polyamidharzes A und 8 bis 1 Gew.-% eines Phyllosilikats B umfasst, das mit einen organischen Quellmittel behandelt wurde, wobei das Polyamidharz A aus einer Diamineinheit, die 70 Mol.-% oder mehr m-Xylylendiamin-Einheiten enthält, und einer Dicarbonsäureeinheit, die 70 Mol.-% oder mehr einer linearen aliphatischen $\alpha,\omega$-$C_4$-$C_{20}$-Dicarbonsäureeinheit enthält, ausgebaut ist; und

wobei die Blasformtemperatur und die Vorheizzeit vor dem biaxialen Streck-Blasformen auf Werte festgesetzt werden, die in einem Test mit einem ungestreckten Einschichtfilm gefunden wurden, der aus demselben Kompositharz C hergestellt ist, das in dem Mehrschicht-Schlauchkopf vorliegt, so dass eine maximale Streckbelastung von 0,2 bis 2,0 MPa erreicht wird, wenn der ungestreckte Einschichtfilm mit einer Dicke von 180 $\mu$m einem gleichzeitigen biaxialen Strecken bei einer linearen Streckgeschwindigkeit von 60 %/s in jeder Streckrichtung und bei einem Streckverhöltnis von 3 x 3 unterzogen wird.

## Revendications

1.  Procédé de production d'un récipient creux multicouche anti-gaz comprenant les étapes de :

    former une paraison multicouche comprenant au moins une couche anti-gaz 1 fabriquée d'une résine composite C et au moins une couche de résine 2 fabriquée d'une résine thermoplastique D ayant un point de transition vitreuse inferieur au celui de la résine composite C ; et

    mouler par soufflage la paraison multicouche par étirement biaxiale à une température égale ou supérieure au point de transition vitreuse de la résine composite C ;

    dans lequel la résine composite C comprend 92 à 99 % en poids d'une résine de polyamide A et 8 à 1 % en poids d'un phyllosilicate B traité avec un agent de gonflement organique, la résine polyamide A étant constitué par une unité de diamine contenant 70 % molaire ou plus élevé d'unité m-xylylène diamine et d'une unité d'acide dicarboxylique contentant 70 % molaires ou plus élevé d'une unité d'acide dicarboxylique aliphatique $\alpha,\omega$-linéaire en $C_4$-$C_{20}$ ; et

    dans lequel la température de moulage par soufflage et le temps de préchauffage avant le moulage par soufflage en étirant biaxialement sont mise aux valeurs qui ont été trouvées dans un test sur un film non étiré à couche simple fabriqué de la résine composite C tel que présente dans la paraison multicouche pour résulter une résulter en une tension d'étirement maximale 0,2 à 2,0 MPa lorsque ledit film non film non étire à couche simple ayant une épaisseur de 180 $\mu$m est soumis à un étirement biaxial concomitant à une vélocité linéaire de 60 %/s dans chaque direction d'étirement et à un rapport d'étirement de 3 X 3 fois.

**REFERENCES CITED IN THE DESCRIPTION**

**Patent documents cited in the description**

- JP 7251874 A
- JP 7304128 A
- JP 2305828 A
- JP 8053572 A
- JP 2002029012 A